# EUROPÄISCHE PATENTANMELDUNG

(11) **EP 1 577 136 A2**
(43) Veröffentlichungstag der Anmeldung: **21.09.2005**
(21) Anmeldenummer: 05003204.4
(22) Anmeldetag: 15.02.2005
(51) Int. Cl.: B60J 7/047

(54) **Schiebedachsystem**

(30) Priorität: 15.03.2004 DE 102004012525
(71) Anmelder: ArvinMeritor GmbH, 63128 Dietzenbach (DE)
(72) Erfinder: Grimm, Rainer, 60299 Frankfurt (DE); Becher, Thomas, 63110 Rodgau (DE); Röder, Joachim, 63135 Mühlheim (DE); Böhm, Horst, 60599 Frankfurt (DE)
(74) Vertreter: Sties, Jochen

(57) **Zusammenfassung**

Ein Schiebedachsystem mit mindestens einem Deckel (8), zwei Führungsschienen (10), einem ersten und einem zweiten Schlitten (12), die in den Führungsschienen (10) verschiebbar sind, und einem ersten und einem zweiten Halteteil (18), die jeweils mit einem Schlitten (12) und mit dem hinteren Rand des Deckels (8) gekoppelt sind, ist dadurch gekennzeichnet, daß die Halteteile (18) verstellbar sind zwischen einer ersten Position, in der zwischen ihnen ein erster lichter Abstand herrscht, und einer zweiten Position, in der zwischen ihnen ein zweiter lichter Abstand herrscht, der größer ist als der erste Abstand.

## Beschreibung

Die Erfindung betrifft ein Schiebedachsystem mit mindestens einem Deckel, zwei Führungsschienen, einem ersten und einem zweiten Schlitten, die in den Führungsschienen verschiebbar sind, und einem ersten und einem zweiten Halteteil, die jeweils mit einem Schlitten und mit dem hinteren Rand des Deckels gekoppelt sind.

Bei herkömmlichen Schiebedachsystemen kann durch Verschieben der Schlitten in den Führungsschienen der Deckel zunächst an seinem hinteren Rand angehoben oder abgesenkt und dann insgesamt verschoben werden. Solange nur ein einziger Deckel vorhanden ist, der nach hinten beispielsweise über die Dachhaut verfahren werden soll, kann die erforderliche Hubbewegung des Deckels mit bekannten Führungsmechanismen problemlos erzeugt werden.

In jüngster Zeit sind jedoch Schiebedachsysteme bekannt geworden, die zwei hintereinanderliegende Deckel aufweisen, nämlich einen ersten Deckel, der verstellbar ist, um eine Dachöffnung freizugeben, und einen zweiten, feststehenden Deckel. Beide bestehen aus transparentem Material, so daß insgesamt eine sehr große transparente Fläche geschaffen ist. Aus optischen Gründen wäre es wünschenswert, die beiden Deckel entweder identisch auszuführen, mindestens aber mit gleicher Breite, wenigstens im Bereich ihrer aneinander anliegenden Ränder. Außerdem sollen die beiden Deckel so breit wie möglich ausgeführt werden. Mit den bekannten Führungsmechanismen ist es jedoch nicht möglich, den ersten Deckel über die Außenseite des zweiten Deckels zu verfahren. Die unterhalb des ersten Deckels angebrachte Führungsmechanik ist nämlich etwas schmäler als der erste Deckel und damit auch als der Vorderrand des zweiten Deckels. Aus diesem Grunde wurde bisher der zweite Deckel schmäler ausgeführt als der erste Deckel, so daß die Führungsmechanik des ersten Deckels seitlich an den Rändern des zweiten Deckels vorbeilaufen kann.

Die Aufgabe der Erfindung besteht darin, ein Schiebedachsystem zu schaffen, mit dem ein Deckel auch dann verstellt werden kann, wenn er über ein anderes Bauteil verfahren werden soll, welches dieselbe Breite wie dieser Deckel hat.

Zur Lösung dieser Aufgabe ist erfindungsgemäß bei einem Schiebedachsystem der eingangs genannten Art vorgesehen, daß die Halteteile verstellbar sind zwischen einer ersten Position, in der zwischen ihnen ein erster lichter Abstand herrscht, und einer zweiten Position, in der zwischen ihnen ein zweiter lichter Abstand herrscht, der größer ist als der erste Abstand. Die Erfindung beruht auf dem Grundgedanken, die im Bereich der Hinterkante des Deckels vorgesehene Verbindung zwischen dem Schlitten und dem Deckel in Abhängigkeit von ihrer jeweiligen Stellung in der Führungsschiene zu verstellen. Solange sich der hintere Rand des ersten Deckels nicht über dem zweiten Deckel befindet, können die Halteteile sich in ihrer ersten Position befinden, in der sie einen vergleichsweise kleinen Abstand voneinander haben. Der maximale Abstand der beiden Halteteile voneinander ist insbesondere kleiner als die Breite der Dachöffnung in diesem Bereich, so daß der gesamte Führungsmechanismus für den Deckel unterhalb des Deckels, also nicht sichtbar, aufgenommen ist. Wenn der hintere Rand des ersten Deckels über den Vorderrand des zweiten Deckels verschoben werden soll, werden die Halteteile in ihre zweite Position gebracht, in der zwischen ihnen ein lichter Abstand vorliegt, der größer ist als die Breite des zweiten Deckels. Die beiden Halteteile können somit seitlich des zweiten Deckels nach hinten verschoben werden.

Gemäß einer bevorzugten Ausführungsform der Erfindung ist vorgesehen, daß die Führungsschienen einen ersten und einen zweiten Abschnitt aufweisen, wobei der Abstand der Führungsschienen voneinander im zweiten Abschnitt größer ist als im ersten Abschnitt. Bei dieser Ausführungsform werden die Schlitten zusammen mit den Halteteilen unmittelbar nach außen verstellt, so daß sie seitlich beispielsweise des zweiten Deckels nach hinten verschoben werden können.

Gemäß einer zweiten bevorzugten Ausführungsform der Erfindung ist vorgesehen, daß jeder Schlitten eine Führungskulisse mit einem ersten und einem zweiten Abschnitt aufweist, wobei der Abstand der Führungskulissen voneinander im zweiten Abschnitt größer ist als im ersten Abschnitt. Bei dieser Ausführungsform ist vorgesehen, daß die beiden Halteteile innerhalb der Führungsschiene jeweils von innen nach außen verschoben werden, um zwischen sich einen größeren Abstand freizugeben.

Gemäß einer dritten bevorzugten Ausführungsform der Erfindung ist vorgesehen, daß die Halteteile, um von der ersten Position in die zweite Position zu gelangen, um eine Lagerachse verdreht werden. Bei dieser Ausführungsform ist es nicht erforderlich, das gesamte Halteteil zwischen dem Schlitten und dem Deckel nach außen zu verschieben; es ist lediglich notwendig, das Halteteil geeignet zu verdrehen.

Vorteilhafte Ausgestaltungen der Erfindung ergeben sich aus den Unteransprüchen.

Die Erfindung wird nachfolgend anhand verschiedener Ausführungsformen beschrieben, die in den beigefügten Zeichnungen dargestellt sind. In diesen zeigen:
- die Figuren 1a und 1b jeweils eine schematische, perspektivische Ansicht eines Fahrzeugdachs mit einem erfindungsgemäßen Schiebedachsystem im geschlossenen bzw. geöffneten Zustand;
- Figur 2 eine schematische Draufsicht auf ein Schiebedachsystem gemäß einer ersten Ausfiihrungsform;
- Figur 3 in einem schematischen Schnitt entlang der Ebene III-III das Schiebedachsystem gemäß der ersten Ausführungsform mit geöffnetem ersten Deckel;
- Figur 4 in einem schematischen Schnitt entlang der Ebene IV ein Schiebedachsystem gemäß einer zweiten Ausführungsform, wobei sich der erste Deckel in seiner geschlossenen Stellung befindet;
- Figur 5 in einem schematischen Schnitt entlang der Ebene V von Figur 1, wobei sich der erste Deckel in einer geöffneten Stellung befindet;
- Figur 6 in einer perspektivischen, abgebrochenen Ansicht einen Schlitten für eine Ausführungsvariante eines Schiebedachsystems gemäß der zweiten Ausführungsform;
- Figur 7 in einer Ansicht entsprechend derjenigen von Figur 4 einen Schnitt durch eine zweite Ausführungsvariante eines Schiebedachsystems gemäß der zweiten Ausführungsform;
- Figur 8 das Schiebedachsystem von Figur 7, wobei sich der zweite Deckel in einer geöffneten Stellung befindet;
- Figur 9 in einer perspektivischen Ansicht einen Schlitten für das Schiebedachsystem von Figur 7;
- Figur 10 den Schlitten von Figur 9 in einem geschnittenen Zustand;
- Figur 11 in einer Ansicht entsprechend derjenigen von Figur 4 eine dritte Ausführungsvariante eines Schiebedachsystems gemäß der zweiten Ausführungsform;
- Figur 12 das Schiebedachsystem von Figur 11 in einer Ansicht entsprechend derjenigen von Figur 5;
- Figur 13 schematisch ein Schiebedachsystem gemäß einer dritten Ausführungsform in einem Schnitt entlang der Ebene V von Figur 1, wobei sich der erste Deckel in seiner geöffneten Stellung befindet;
- Figur 14 eine perspektivische Ansicht des Schlittens des Schiebedachsystems gemäß der dritten Ausführungsform;
- Figur 15 schematisch das Halteteil des Schiebedachsystems von Figur 13 in der ersten Position;
- Figur 16 schematisch den Übergang des Halteteils von der ersten zur zweiten Position; und
- Figur 17 schematisch das Halteteil des Schiebedachsystems von Figur 13 in seiner zweiten Position.

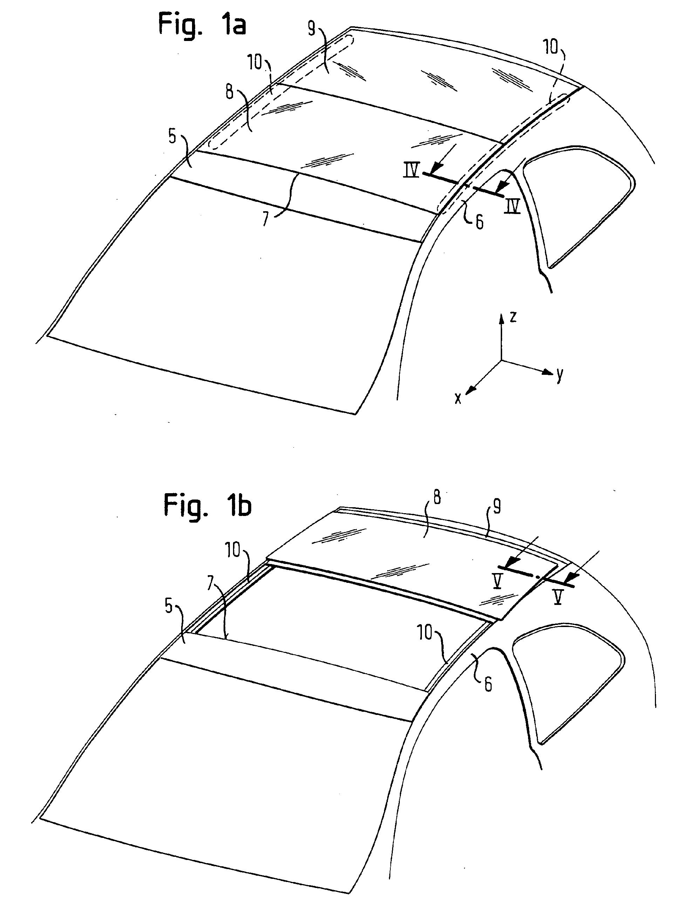

In den Figuren 1a und 1b ist ein Fahrzeugdach 5 gezeigt, in welchem eine Dachöffnung 7 vorgesehen ist. In der Dachöffnung 7 sind ein erster Deckel 8 und ein zweiter Deckel 9 angeordnet. Beide Deckel 8, 9 bestehen aus einem transparenten Material. Der zweite Deckel 9 ist fest am Fahrzeugdach 5 angebracht. Der erste Deckel 8 kann aus seiner in Figur 1a gezeigten, geschlossenen Stellung, in welcher er die Dachöffnung 7 verschließt, nach außen und hinten verstellt werden, so daß er oberhalb des zweiten Deckels 9 liegt (siehe Figur 1b).

Soweit zur Beschreibung des Schiebedachmechanismus Begriffe wie "oben", "unten", "vorne", "hinten" etc. verwendet werden, wird auf ein übliches Koordinatensystem eines Kraftfahrzeugs Bezug genommen. "Vorne" entspricht also der x-Richtung und oben der z-Richtung.

Es sind zwei Führungsschienen 10 vorgesehen, entlang denen der erste Deckel 8 zwischen seiner geschlossenen Stellung und seiner geöffneten Stellung verschoben werden kann. Die Führungsschienen 10 sind fest a Längsholmen 6 angebracht, die den Übergang zum Fahrzeugdach 5 darstellen. Sie können beispielsweise aus Kunststoff oder einer Aluminiumlegierung bestehen. In den Führungsschienen ist jeweils mindestens ein Schlitten verschiebbar angebracht. Dieser Schlitten kann beispielsweise über ein Kabel von einem Antriebsmotor verstellt werden. Der oder die Schlitten gewährleisten zusammen mit beispielsweise Führungskulissen oder Hubkulissen, daß der erste Deckel in der gewünschten Weise entlang der Längsrichtung des Fahrzeugs von vorne nach hinten verstellt werden sowie mit seinem vorderen und seinem hinteren Rand nach oben bzw. unten verstellt werden. Für das Verständnis der vorliegenden Erfindung ist nur relevant, in welcher Weise der hintere Rand des Deckels gehalten ist und verstellt wird. Daher wird in den Figuren nur auf den hinteren Schlitten, bezeichnet mit dem Bezugszeichen 12, eingegangen. Dabei ist zu berücksichtigen, daß der Schlitten 12 entweder Teil eines einzigen, größeren Schlittens sein kann, mittels dem auch der vordere Rand des Deckels 8 verstellt wird, oder mit einem vorderen Schlitten verbunden sein kann.

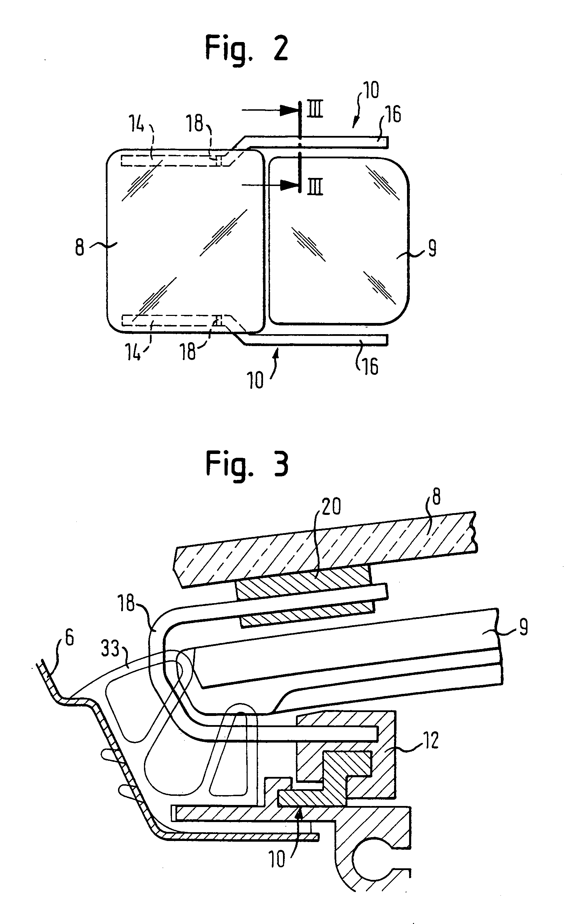

In den Figuren 2 und 3 ist ein Schiebedachmechanismus gemäß einer ersten Ausführungsform gezeigt. Die beiden Führungsschienen 10 weisen jeweils, in dem vom ersten Deckel 8 in seiner geschlossenen Stellung eingenommenen Bereich, einen ersten Abschnitt 14 auf; an den ersten Abschnitt 14 schließt sich ein zweiter Abschnitt 16 an, der jeweils außerhalb des zweiten Deckels 9 liegt. Es ist in Figur 2 zu sehen, daß die beiden ersten Abschnitte 14 einen Abstand voneinander haben, der kleiner ist als die Breite des ersten Deckels, und daß die zweiten Abschnitte 16 einen Abstand voneinander haben, der größer ist als der Abstand im ersten Abschnitt und auch größer als die Breite des zweiten Deckels 9 (und auch des ersten Deckels 8). Obwohl in Figur 2 nicht sichtbar, befinden sich auch die beiden Abschnitte 16 auf einem Niveau, das höher ist als das Niveau der beiden ersten Abschnitte 14. Zwischen den beiden Abschnitten 14, 16 befindet sich also ein Übergangsabschnitt, in welchem jede Führungsschiene 10 schräg nach oben und außen verläuft.

Auf jeder Führungsschiene 10 ist ein Schlitten 12 angeordnet, in welchem ein Halteteil 18 angebracht ist. Das Halteteil 18 ist allgemein C-förmig gekrümmt, wobei sein "Bauch" nach außen gerichtet ist. Auf diese Weise ist ein freier Innenraum geschaffen. Jedes Halteteil 18 ist am ersten Deckel 8 mittels einer Führung 20 angebracht, in welcher das Halteteil 18 verschiebbar gelagert ist. Die Führung 20 ermöglicht eine Verschiebung des Halteteils 18 quer zur Längsrichtung der Führungsschienen, also etwa parallel zur y-Richtung

Wenn sich der erste Deckel 8 in seiner geschlossenen Stellung befindet, befindet sich jedes Halteteil 18 in einer ersten Position unterhalb des ersten Deckels 8; sein am weitesten außen liegender Rand liegt innerhalb des Außenrandes des Deckels 8. Wenn der erste Deckel 8 nach hinten über den zweiten Deckel 9 verfahren wird, gleitet der Schlitten 12 vom ersten Abschnitt 14 der Führungsschiene auf den zweiten Abschnitt 16. Dabei wird das Halteteil 18 nach oben und außen in eine zweite Position verstellt, wodurch der lichte Abstand zwischen den beiden "Bäuchen" des Halteteils 18 auf einen Wert zunimmt, der größer ist als die Breite des zweiten Deckels 9. Dies ermöglicht, daß die beiden Halteteile 18 den zweiten Deckel 9 außen umgreifen und den ersten Deckel 8 oberhalb des zweiten Deckels 9 halten (siehe Figur 3).

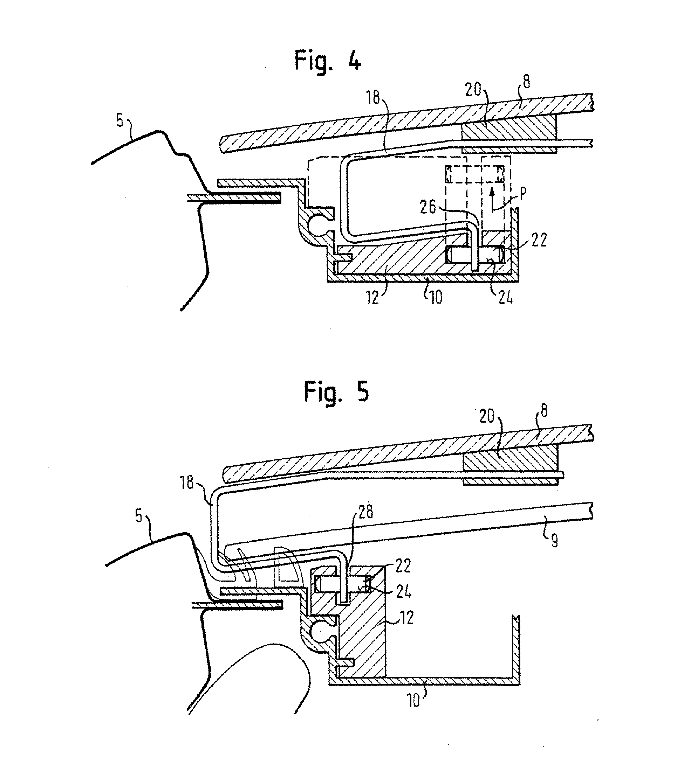

In den Figuren 4 und 5 ist ein Schiebedachsystem gemäß einer zweiten Ausführungsform gezeigt. Im Unterschied zur ersten Ausführungsform wird hier die Verstellbewegung der Halteteile 18 von ihrer ersten Position, in der sie unterhalb des ersten Deckels liegen, hin zu ihrer zweiten Position, in der sie den zweiten Deckel außenseitig umgreifen, im Inneren des Schlittens selben erzeugt; die Führungsschiene verläuft etwa geradlinig entlang der x-Achse des Fahrzeugs.

Das Halteteil 18 ist bei der zweiten Ausführungsform mit einem Querzapfen 22 versehen, der in einer Führungskulisse 24 im Schlitten 12 geführt ist. Die Führungskulisse 24 ist mit einem ersten Abschnitt 26 versehen, der in Figur 4 zu sehen ist, und mit einem zweiten Abschnitt 28, der in Figur 5 zu sehen ist. Der zweite Abschnitt 28 der Führungskulisse 24 liegt weiter außen als der erste Abschnitt, so daß der Abstand zwischen den beiden Führungskulissen im zweiten Abschnitt größer ist als im ersten Abschnitt.

Wenn sich der erste Deckel 8 in seiner geschlossenen Stellung befindet (siehe Figur 4), befindet sich der Querzapfen 22 des Halteteils 18 im ersten Abschnitt der Führungskulisse 24, so daß sich das Halteteil 18 vollständig unterhalb des ersten Deckels 8 in seiner ersten Position befindet. Wenn der erste Deckel 8 in seine geöffnete Stellung überführt wird, gleitet der Querzapfen 22 in der Führungskulisse 24 nach oben (siehe Pfeil P in Figur 4) und anschließend nach außen in den zweiten Abschnitt 28, wodurch das Halteteil 18 nach oben und außen in seine zweite Position verstellt wird. Dies ermöglicht, den zweiten Deckel 9 auf seinen Außenrändern zu umgreifen (siehe Figur 5) und den ersten Deckel 8 oberhalb des zweiten Deckels 9 zu führen.

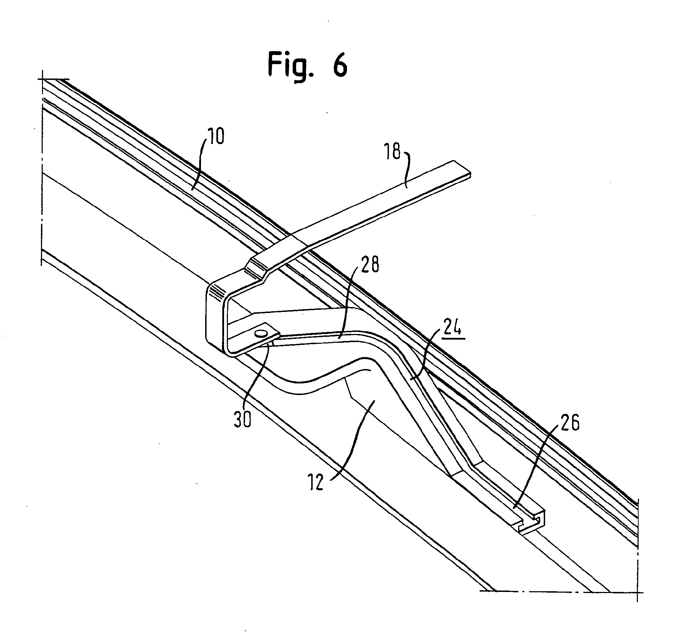

In Figur 6 ist eine Ausführungsvariante der zweiten Ausführungsform gezeigt. Im Unterschied zu der in den Figuren 4 und 5 gezeigten Variante ist am Halteteil 18 kein Querzapfen 22 vorgesehen, sondern ein Kugelkopf 30. Der Kugelkopf 30 führt das Halteteil 18 vom ersten Abschnitt 26 über einen schräg nach oben verlaufenden Übergangsabschnitt zum zweiten Abschnitt 28, der schräg nach außen läuft. Am Ende des zweiten Abschnittes 28 der Führungskulisse 24 ist das Halteteil 18 so weit nach außen in seine zweite Position verstellt, daß es den zweiten Deckel 9 entlang dessen Längsrändern umgreifen kann.

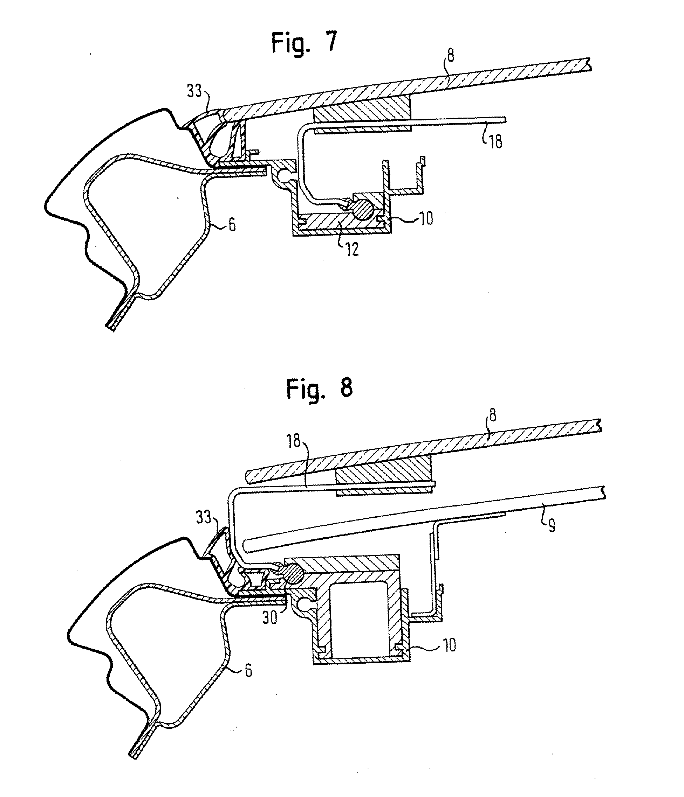

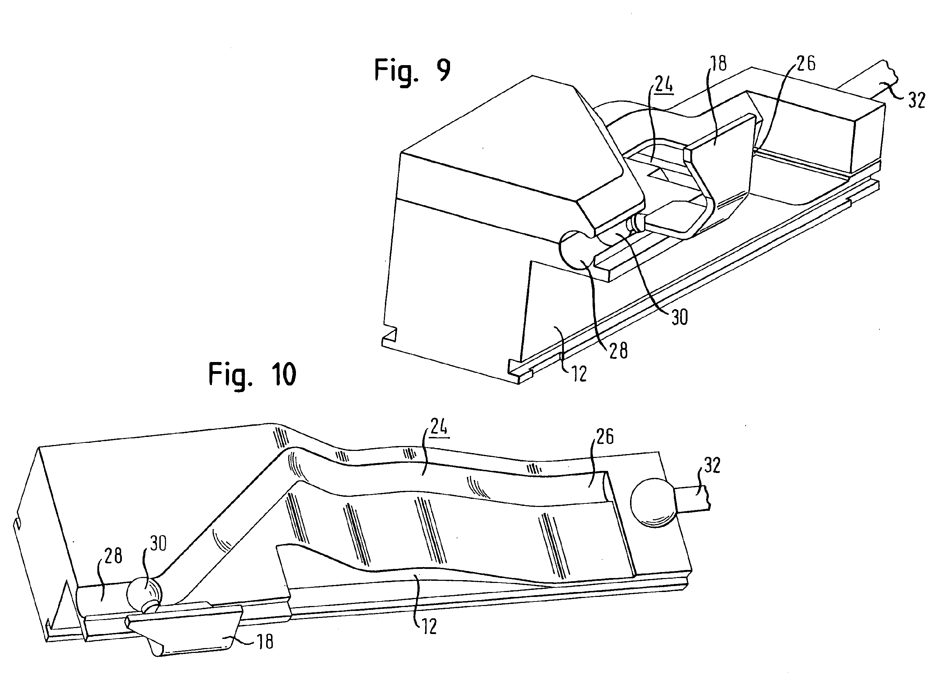

In den Figuren 7 bis 10 ist ein Schiebedachsystem gemäß einer weiteren Ausführungsvariante gezeigt. Im Unterschied zur Ausführungsvariante von Figur 6, bei der die Führungskulisse 24 nach oben geöffnet ist, ist bei der Ausführungsvariante der Figuren 7 bis 10 die Führungskulisse 24 seitlich nach außen geöffnet. Außerdem ist ein Verbindungselement 32 zu sehen, mittels dem der Schlitten 12 mit einem (nicht dargestellten) vorderen Schlitten verbunden ist, der den vorderen Rand des ersten Deckels 8 führt.

In Figur 8 ist gut zu sehen, wie sich das Halteteil 18 zwischen dem zweiten Deckel und dem Längsholm 6 vorbeibewegt, wobei eine Dichtung 33 zur Seite gedrückt wird, die zwischen dem zweiten Deckel 9 und dem Längsholm 6 abdichtet.

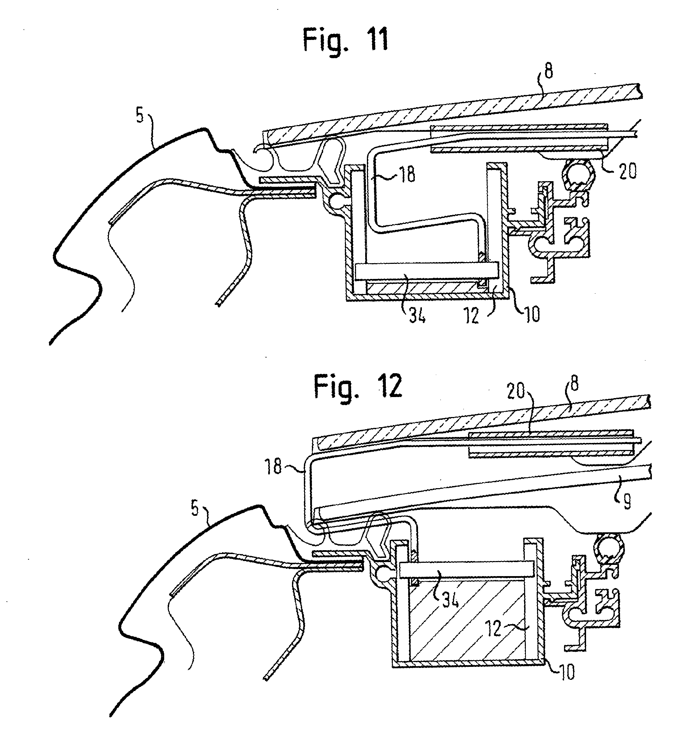

In den Figuren 11 und 12 ist eine weitere Ausführungsvariante gezeigt. Diese unterscheidet sich von der in den Figuren 4 und 5 gezeigten Ausführungsvariante dadurch, daß das Halteteil 18 verschiebbar auf einem Querbolzen 34 gelagert ist, der wiederum in vertikaler Richtung verschiebbar in einer Führungskulisse im Schlitten 12 gelagert ist. Die Verstellung des Halteteils 18 von der ersten Position nach oben und nach außen in die zweite Position erfolgt also dadurch, daß bei der Verstellung des Schlittens 12 in der Führungsschiene 10 zum einen der Querbolzen 34 aus seiner unteren Stellung (siehe Figur 11) in eine obere Stellung (siehe Figur 12) überführt wird. Gleichzeitig wird das Halteteil 18 auf dem Querbolzen 34 von einer inneren Position (siehe Figur 11) in eine äußere Position (siehe Figur 12) überführt. In seiner ersten Position (siehe Figur 11) liegt das Halteteil 18 unterhalb des ersten Deckels 8 und auch innerhalb der Führungsschiene 10. In seiner zweiten Position (siehe Figur 12) ist das Halteteil 18 so weit nach außen verstellt, daß es den zweiten Deckel 9 auf seiner Außenseite umgreifen und den ersten Deckel 8 oberhalb des zweiten Deckels 9 führen kann. Wie durch Vergleich der Figuren 11 und 12 zu sehen ist, ist das erste Halteteil 18 in der Führung 20 nach außen verschoben.

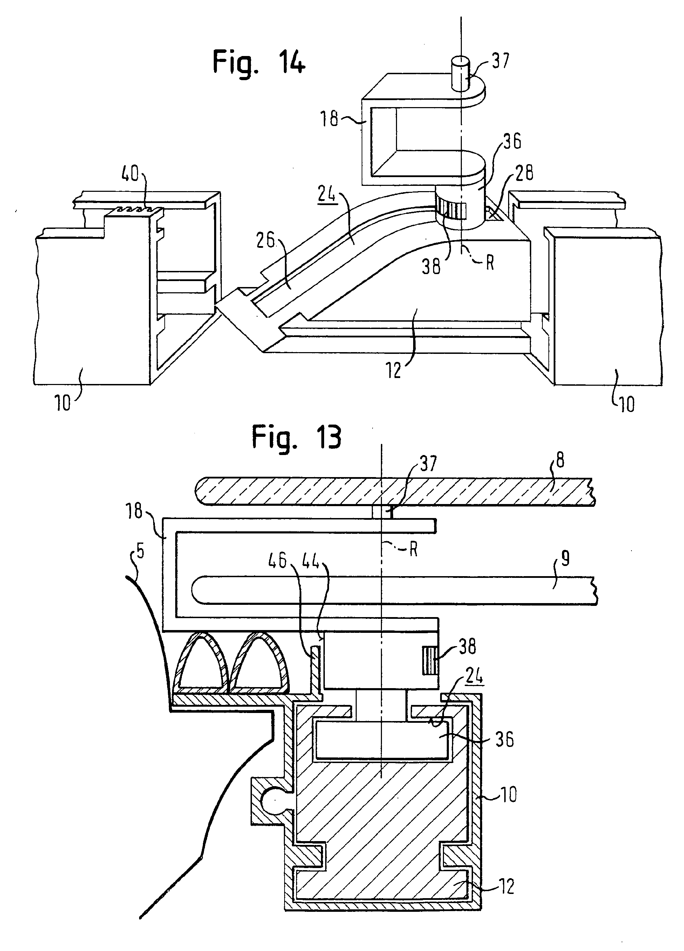

In den Figuren 13 bis 17 ist eine dritte Ausführungsform des Schiebedachmechanismus gezeigt. Bei dieser Ausführungsform ist der Schlitten 12 mit einer Führungskulisse 24 versehen, die sich parallel zur Längsrichtung der Führungsschiene 10 erstreckt, jedoch von einem ersten Abschnitt 26 zu einem zweiten Abschnitt 28 nach oben verläuft. In der Führungsschiene ist das Halteteil 18 aufgenommen, wobei es in der Führungskulisse 24 mittels eines Gleiters 36 eingreift, der in der Führungskulisse 24 drehbar ist. Am ersten Deckel 8 ist das Halteteil 18 mit einem Drehzapfen 37 gelagert, dessen Drehachse R mit der Drehachse des Gleiters 36 in der Führungskulisse 24 zusammenfällt. Der Gleiter 36 ist mit einem Zahnsegment 38 versehen, und die Führungsschiene 10 ist mit einer Verzahnung 40 versehen, die in das Zahnsegment 38 eingreifen kann. Die Länge der Verzahnung 40 ist so gewählt, daß sie einer viertel Umdrehung des Gleiters 36 entspricht. Der Gleiter 36 ist außerdem mit zwei zueinander senkrecht stehenden Arretierungsflächen 42, 44 versehen, die mit einer Gegenfläche 46 an der Führungsschiene 10 zusammenwirken können.

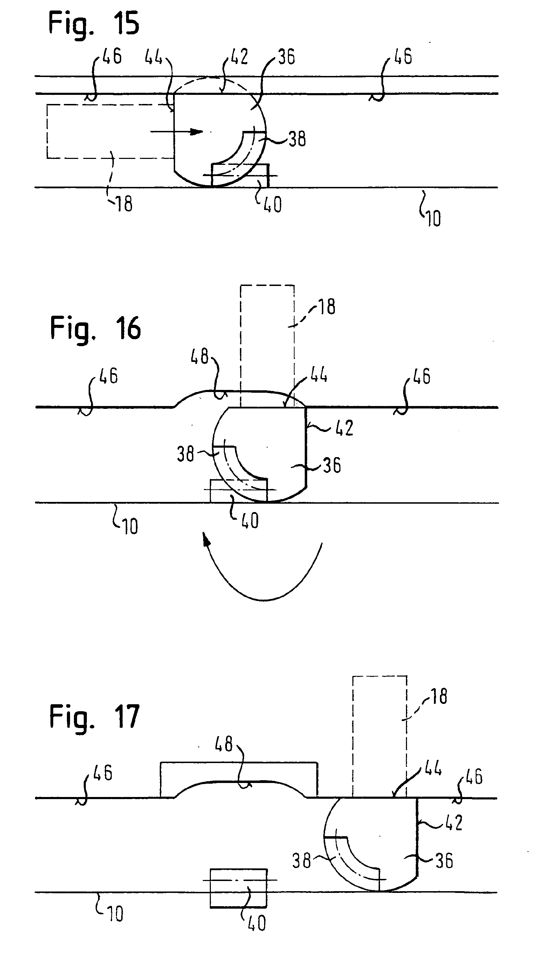

Wenn sich das Halteteil 18 in seiner ersten Position befindet (siehe die Figuren 14 und 15), ist der "Bauch" des Halteteils nach vorne oder nach hinten gerichtet. Wie insbesondere in Figur 15 zu sehen ist, liegt das Halteteil 18 somit, von oben betrachtet, oberhalb der Führungsschiene 10 und damit innerhalb der Seitenränder des ersten Deckels 8. In dieser Position liegt die erste Arretierungsfläche 42 an der Gegenfläche 46 der Führungsschiene 10 an. Wenn der erste Deckel 8 nach hinten verstellt wird, trifft das Zahnsegment 38 am Gleiter 36 auf die Verzahnung 40 an der Führungsschiene 10. Dadurch wird dem Gleiter 36, wenn er weiter nach hinten verschoben wird (bezüglich den Figuren 15 und 16 nach rechts), eine Drehung bezüglich Figur 15 im Uhrzeigersinn aufgezwungen, und zwar um eine viertel Umdrehung. Dadurch wird der Bauch des Halteteils 18 nach außen verschwenkt (siehe Figur 16), so daß er die Längsränder des zweiten Deckels 9 außen umgreifen kann. Die Drehung des Gleiters 36 um 90° wird ermöglicht durch eine Aussparung 48 in der Gegenfläche 46. Nachdem das Zahnsegment 38 die Verzahnung 40 verlassen hat, wird der Gleiter 36 wieder von der Gegenfläche 46 arretiert, diesmal aber in seiner zweiten Position (siehe Figur 17).

Gemäß einer nicht dargestellten Weiterbildung der Erfindung können auch an der Vorderkante des ersten Deckels verstellbare Halteteile vorgesehen sein. Dies ermöglicht, den ersten Deckel noch weiter nach hinten, nämlich vollständig über den zweiten Deckel zu verfahren.

### Bezugszeichenliste

- 5:: Fahrzeugdach
- 6:: Längsholm
- 7:: Dachöffnung
- 8:: erster Deckel
- 9:: zweiter Deckel
- 10:: Führungsschiene
- 12:: Schlitten
- 14:: erster Abschnitt der Führungsschiene
- 16:: zweiter Abschnitt der Führungsschiene
- 18:: Halteteil
- 20:: Führung
- 22:: Querzapfen
- 24:: Führungskulisse
- 26:: erster Abschnitt der Führungskulisse
- 28:: zweiter Abschnitt der Führungskulisse
- 30:: Kugelkopf
- 32:: Verbindungselement
- 33:: Dichtung
- 34:: Querbolzen
- 36:: Gleiter
- 37:: Drehzapfen
- 38:: Zahnsegment
- 40:: Verzahnung
- 42:: erste Arretierungsfläche
- 44:: zweite Arretierungsfläche
- 46:: Gegenfläche
- 48:: Aussparung

## Patentansprüche

1. Schiebedachsystem mit mindestens einem Deckel (8), zwei Führungsschienen (10), einem ersten und einem zweiten Schlitten (12), die in den Führungsschienen (10) verschiebbar sind, und einem ersten und einem zweiten Halteteil (18), die jeweils mit einem Schlitten (12) und mit dem hinteren Rand des Deckels (8) gekoppelt sind, **dadurch gekennzeichnet, daß** die Halteteile (18) verstellbar sind zwischen einer ersten Position, in der zwischen ihnen ein erster lichter Abstand herrscht, und einer zweiten Position, in der zwischen ihnen ein zweiter lichter Abstand herrscht, der größer ist als der erste Abstand.

2. Schiebedachsystem nach Anspruch 1, **dadurch gekennzeichnet, daß** ein zweiter Deckel (9) vorgesehen ist, der hinter dem ersten Deckel (8) liegt, und daß der lichte Abstand zwischen den beiden Halteteilen (18), wenn diese sich in der zweiten Position befinden, größer ist als die Breite des zweiten Deckels.

3. Schiebedachsystem nach Anspruch 1 oder Anspruch 2, **dadurch gekennzeichnet, daß** die Halteteile (18), um von der ersten Position in die zweite Position zu gelangen, im wesentlichen quer zur Längsrichtung der Führungsschienen (10) voneinander weg verschoben werden.

4. Schiebedachsystem nach Anspruch 3, **dadurch gekennzeichnet, daß** die Führungsschienen (10) einen ersten und einen zweiten Abschnitt (14, 16) aufweisen, wobei der Abstand der Führungsschienen (10) voneinander im zweiten Abschnitt (16) größer ist als im ersten Abschnitt (14).

5. Schiebedachsystem nach Anspruch 3, **dadurch gekennzeichnet, daß** jeder Schlitten (12) eine Führungskulisse (24) mit einem ersten und einem zweiten Abschnitt (26, 28) aufweist, wobei der Abstand der Führungskulissen voneinander im zweiten Abschnitt (28) größer ist als im ersten Abschnitt (26).

6. Schiebedachsystem nach Anspruch 5, **dadurch gekennzeichnet, daß** die Führungskulisse (24) nach oben offen ist.

7. Schiebedachsystem nach Anspruch 5, **dadurch gekennzeichnet, daß** die Führungskulisse (24) seitlich offen ist.

8. Schiebedachsystem nach einem der Ansprüche 5 bis 7, **dadurch gekennzeichnet, daß** das Halteteil (18) einen Kugelkopf (30) aufweist, der in die Führungskulisse (24) eingreift.

9. Schiebedachsystem nach einem der Ansprüche 5 bis 7, **dadurch gekennzeichnet, daß** das Halteteil (18) einen Querzapfen (22) aufweist, der in die Führungskulisse (24) eingreift.

10. Schiebedachsystem nach einem der Ansprüche 5 bis 7, **dadurch gekennzeichnet, daß** das Halteteil (18) in Querrichtung verschiebbar auf einem Querbolzen (34) gelagert ist, der im Schlitten (12) in vertikaler Richtung verstellbar ist.

11. Schiebedachsystem nach einem der vorhergehenden Ansprüche, **dadurch gekennzeichnet, daß** das Halteteil (18) am Deckel (8) in einer Führung (20) gelagert ist, die eine Verschiebung quer zur Längsrichtung der Führungsschienen (10) ermöglicht.

12. Schiebedachsystem nach Anspruch 1 oder Anspruch 2, **dadurch gekennzeichnet, daß** die Halteteile (18), um von der ersten Position in die zweite Position zu gelangen, um eine Lagerachse (R) verdreht werden.

13. Schiebedachsystem nach Anspruch 12, **dadurch gekennzeichnet, daß** das Halteteil (18) drehbar am Schlitten (12) und am Deckel (8) gelagert ist.

14. Schiebedachsystem nach Anspruch 12 oder Anspruch 13, **dadurch gekennzeichnet, daß** das Halteteil (18) am Schlitten (12) in einer Führungskulisse (24) gelagert ist, die das Halteteil (18) in vertikaler Richtung verstellen kann.

15. Schiebedachsystem nach einem der Ansprüche 12 bis 14, **dadurch gekennzeichnet, daß** an der Führungsschiene (10) eine Verzahnung (40) vorgesehen ist, mittels der das Halteteil (18) aus seiner ersten Position in die zweite Position verdreht wird.

16. Schiebedachsystem nach einem der Ansprüche 12 bis 15, **dadurch gekennzeichnet, daß** das Halteteil mit zwei Arretierungsflächen (42, 44) versehen ist, die das Halteteil (18) durch Anlage an der Führungsschiene (10) in der ersten bzw. der zweiten Position arretieren.

17. Schiebedachsystem nach einem der vorhergehenden Ansprüche, **dadurch gekennzeichnet, daß** auch an der Vorderkante des Deckels verstellbare Halteteile vorgesehen sind.
